# EUROPÄISCHE PATENTSCHRIFT

(11) **EP 3 285 163 B1**
(45) Veröffentlichungstag und Bekanntmachung des Hinweises auf die Patenterteilung: **21.10.2020**
(21) Anmeldenummer: 17184468.1
(22) Anmeldetag: 02.08.2017
(51) Int. Cl.: G06F 9/44

(54) **FEHLERTOLERANTES VERFAHREN UND VORRICHTUNG ZUR STEUERUNG EINER AUTONOMEN TECHNISCHEN ANLAGE MITTELS DIVERSITÄRER TRAJEKTORENPLANUNG**
FAULT-TOLERANT METHOD AND DEVICE FOR CONTROLLING AN AUTONOMOUS TECHNICAL PLANT BY MEANS OF DIVERSE TRAJECTOR PLANNING
PROCÉDÉ ET DISPOSITIF DE COMMANDE INSENSIBLE AUX DÉFAILLANCES D'UNE INSTALLATION TECHNIQUE AUTONOME AU MOYEN D'UNE PLANIFICATION DE TRAJECTOIRES DIVERSITAIRES

(30) Priorität: 16.08.2016 AT 507372016
(43) Veröffentlichungstag der Anmeldung: 21.02.2018
(73) Patentinhaber: TTTech Auto AG, 1040 Wien (AT)
(72) Erfinder: Poledna, Stefan, 3400 Klosterneuburg (AT); Niedrist, Georg, 2353 Guntramsdorf (AT); Schmidt, Eric, 2143 Großkrut (AT); Kopetz, Hermann, 2500 Baden (AT)
(74) Vertreter: Patentanwaltskanzlei Matschnig & Forsthuber OG

(56) Entgegenhaltungen:
- EP-A2- 2 592 554
- WO-A1-2014/138765
- WO-A2-2016/033629
- GB-A- 2 484 404

## Beschreibung

### Zitierte Literatur

### Patente:

US Pat. Application 20160033965 *Device and Method for the Autonomous Control of Vehicles,* published Feb. 4, 2016

### Sonstige:

Wikipedia, Autonomes Fahren, abgerufen am 11.8.2016

Wikipedia, Automotive Safety Integrity Levels ISO 26262, abgerufen am 11.8.2016

FAA. Advisory Circular System Safety Assessment for Part 23 Airplanes. URL: http://www.faa.gov/documentLibrary/media/Advisory_Circular/AC%2023.1309 -lE.pdf abgerufen am 11.8.2016

Avizienis, A. The N-Version Approach to Fault-Tolerant Software, IEEE Trans. on Software Engineering, Vol 11, pp. 1491-1501. Dez. 1985,

Kopetz, H. Real-Time Systems, Design Principles for Distributed Embedded Applications. Springer Verlag. 2011.

### Technisches Umfeld

Die vorliegende Erfindung liegt im Bereich der Computertechnik. Sie betrifft ein Verfahren und eine elektronisches System zur fehlertoleranten Steuerung einer autonomen technischen Anlage, insbesondere eines Fahrzeugs.

### Kurze Beschreibung der Erfindung

Die Entwicklungen der Sensortechnik und der Computertechnik ermöglichen die weitgehend autonome Steuerung einer technischen Anlage oder eines Fahrzeugs, das autonom sein Ziel ansteuert.

Laut Wikipedia [2] wird die Klassifizierung des *autonomen Fahrens* in sechs Stufen vorgenommen:
- ***Level 0:** "Driver only* ", *der Fahrer fährt selbst, lenkt, gibt Gas, bremst etc.*
- ***Level 1:** Bestimmte Assistenzsystem helfen bei der Fahrzeugbedienung (u.a. ACC).*
- ***Level 2:** Teilautomatisierung. U.a. automatisches Einparken, Spurhaltefunktion, allgemeine Längsführung, beschleunigen, abbremsen etc. werden von den Assistenzsystemen übernommen (u.a. Stauassistent).*
- ***Level 3:** Hochautomatisierung. Der Fahrer muss das System nicht dauernd überwachen. Das Fahrzeug führt selbstständig Funktionen wie das Auslösen des Blinkers, Spurwechsel und Spurhalten durch. Der Fahrer kann sich anderen Dingen zuwenden, wird aber bei Bedarf innerhalb einer Vorwarnzeit vom System aufgefordert die Führung zu übernehmen. Diese Form der Autonomie ist auf Autobahnen technisch machbar. Der Gesetzgeber arbeitet daraufhin, Level 3-Fahrzeuge zuzulassen. Man spricht von einem Zeitrahmen bis 2020.*
- ***Level 4:** Vollautomatisierung. Die Führung des Fahrzeugs wird dauerhaft vom System übernommen. Werden die Fahraufgaben vom System nicht mehr bewältigt, kann der Fahrer aufgefordert werden, die Führung zu übernehmen.*
- ***Level 5:** Die völlige Autonomie des Fahrzeugs. Das Fahrzeug ist ohne Lenkrad ausgestattet, das Fahrzeug kann sich fahrerlos bewegen.*

In am Markt erhältlichen Fahrzeugen wird gegenwärtig der *Level* 2 realisiert. Bei Level 2 ist der Fahrer verpflichtet, die ordnungsgemäße Funktion des Computersystems kontinuierlich zu überwachen und im Fehlerfall sofort einzugreifen. Bei den höheren Automatisierungsstufen muss das Computersystem fehlertolerant ausgeführt sein, um die Sicherheit des Fahrzeugs auch bei einem Fehler im Computersystem zu gewährleisten; dies wird beispielhaft in der Druckschrfift WO 2014/138765 A1 gezeigt.

In der ISO 26262 Norm wird ein *elektronisches System* (Hardware plus Software) in einem Fahrzeug einer von vier Integritätsstufen (Stufe ASIL A bis ASIL D) zugeordnet, wobei die Stufe ASIL D die höchste Integritätsstufe darstellt [3]. Die Integrität von *elektronischen Systemen* zur vollautomatisierten Fahrzeugsteuerung (Level 4 und Level 5) muss ASIL D entsprechen. Während bei ASIL B die Wahrscheinlichkeit für das Auftreten eines gefährlichen Fehlers der schwerwiegende Folgen für die Sicherheit eines Fahrzeugs hat kleiner sein muss als 10⁻⁶ pro Stunde (d.s. 10³ FIT), muss diese Wahrscheinlichkeit bei ASIL D kleiner sein als 10⁻⁸ pro Stunde (d.s. 10 FIT).

Die Ursache für das Auftreten eines Ausfalls eines *elektronisches System* kann ein Alterungsfehler (physical fault) der Hardware oder ein Entwurfsfehler (design fault) sein.

Ein Alterungsfehler liegt vor, wenn eine Baueinheit, die zu Beginn ihrer Lebenszeit voll funktionstüchtig war auf Grund von Alterungsprozessen der Hardware ausfällt. Bei *state of the art automotive chips* ist die permanente Fehlerrate für Alterungsfehler <100 FIT. Durch den Einsatz von aktiver Redundanz (TMR oder self-checking components) kann die geforderte Fehlerrate von ASIL D (kleiner als 10) FIT in der Hardware erreicht werden.

Entwurfsfehler können in der Hardware oder in der Software enthalten sein. Die Folgen von Hardware Entwurfsfehler können durch aktive Redundanz von diversitärer Hardware beherrscht werden.

Maßnahmen die zu einer Reduktion der Wahrscheinlichkeit für das Vorhandensein eines unentdeckten Entwurfsfehlers in der Software führen sind ein systematischer Entwurfsprozess, Verifikation und Validierung, vor allem durch umfangreiches Testen. Eine wesentliche Ursache für das Auftreten von Entwurfsfehlern in der Software liegt in der Komplexität der Software. Entsprechend dem *State-of-the-Art* ist es möglich ein *komplexes Softwaresystem* so gründlich zu validieren, dass die geforderte Fehlerrate von ASIL B, nicht jedoch von ASIL D erreicht werden kann.

Die vorliegende Erfindung legt ein Verfahren und eine Hardware-Architektur zur Erhöhung der Zuverlässigkeit eines *komplexen elektronischen Systems* offen. Durch den gezielten Einsatz von Hardware- und Softwareredundanz wird die Zuverlässigkeit des *elektronischen Systems* signifikant erhöht.

Im Bereich der Sicherheitstechnik in der Luft und Raumfahrt wird zwischen *einfacher* und *komplexer* Software unterschieden [4]. Wenn die Software, die zum Einsatz kommt, *einfach* ist und formal überprüft und/oder umfassend getestet werden kann, so wird angenommen, dass die geforderte Fehlerrate von ASIL D durch einen sorgfältigen Entwicklungsprozess erreicht werden kann.

Wenn die Software, die zum Einsatz kommt *komplex* ist, so wird angenommen, dass die Wahrscheinlichkeit für das Auftreten von Entwurfsfehlern ASIL B entspricht. Durch Softwareredundanz, d.h. die parallele Ausführung von zwei oder mehr diversitären ASIL B Software-Systemen mit einem anschließenden anwendungsspezifischen Vergleich der Ergebnisse kann die Zuverlässigkeit der Software signifikant erhöht werden. Ein Verfahren zur Erhöhung der Softwarezuverlässigkeit durch aktive Redundanz (TMR) mittels diversitärer Software ist in [5] beschrieben. Dieses Verfahren ist jedoch nicht einsetzbar, wenn sich die diversitären Software Versionen nicht replika deterministisch verhalten.

Diversitäre Software ist nicht *replika deterministisch* wenn in der Software ein *Non-Deterministic Design Construct* (NDDC) [6, p128] vorhanden ist. Ein NDDC entscheidet zwischen zwei richtigen aber nicht kompatiblen Szenarien. Im Allgemeinen darf nicht angenommen werden dass zwei diversitäre Versionen der Software mit NDDCs zu vergleichbaren Ergebnissen kommen.

Wenn z.B. auf einer Straße ein Felsbrocken liegt und die Entscheidung zu treffen ist, ob dieser Felsbrocken von einem Fahrzeug links oder rechts umfahren werden soll, so kann im Allgemeinen nicht angenommen werden, dass zwei diversitäre Software Versionen zu dem gleichen Ergebnis kommen. Obwohl beide Ergebnisse richtig sind, sind sie nicht *replika deterministisch.* Dadurch geht die Fehlertoleranz verloren.

Die autonome Führung eines Kraftfahrzeugs erfordert ein Softwaresystem zur Bilderkennung, Umweltmodellbildung und Trajektorenplanung. Dieses Softwaresystem ist nicht *einfach,* sondern *komplex* und beinhaltet NDDCs.

Erfindungsgemäß wird vorgeschlagen die im gesamten Softwaresystem enthaltenen NDDCs zu identifizieren und aus dem Softwaresystem herauszulösen. Ein NDDC das eine Entscheidung zwischen vorgelegten Alternativen vornimmt wird mittel einer *einfachen Software* ohne Softwareredundanz realisiert. Die *einfache Software* wird auf einer fehlertoleranten Hardware ausgeführt, um auftretende Hardwarefehler zu maskieren.

Die Zuverlässigkeit der verbleibenden *komplexen Software ohne NDDCs* wird durch den Vergleich der Ergebnisse von mehreren diversen Versionen der komplexen Software, die auf unabhängigen *Fault-Containment Units (FCUs)* ausgeführt werden signifikant erhöht. Die *komplexe Software* ermittelt mehrere Alternativen, die einer Entscheidungsinstanz zur Entscheidung übergeben werden.

### Zusammenfassung

Die vorliegende Erfindung beschreibt ein innovatives Verfahren wie ein komplexes elektronisches System zur Steuerung eines sicherheitskritischen technischen Prozesses, z.B. die Führung eines autonomen Fahrzeugs, realisiert werden kann. Es wird zwischen einfacher und komplexer Software unterschieden, wobei die einfache Software auf einer fehlertoleranten Hardware ausgeführt wird und wo mehrere diversitäre Versionen der komplexen Software gleichzeitig auf unabhängigen Fault-Containment Units (FCU) ausgeführt werden und wo aus den Ergebnissen der komplexen Software von einer Entscheidungsinstanz, die mittels einer einfachen Software realisiert ist, ein Ergebnis ausgewählt wird das an die Aktuatoren weiterzuleiten ist.

### Kurze Beschreibung der Zeichnungen

Die vorliegende Erfindung wird an Hand der folgenden Zeichnungen genau erklärt.
Fig. 1 zeigt ein Datenflussdiagramm eines *komplexen elektronischen Systems* zur autonomen Steuerung eines Fahrzeugs.
Fig. 2 zeigt eine mögliche Hardwarearchitektur zur Realisierung des *komplexen elektronischen Systems* der Fig. 1 mit einer TMR Hardware zur Ausführung des NDDC.
Fig. 3 zeigt eine mögliche Hardwarearchitektur zur Realisierung des *komplexen elektronischen Systems* der Fig. 1 mit einer self-checking Hardware zur Ausführung des NDDC.

### Beschreibung einer Realisierung

Die folgende konkrete Beschreibung einer Realisierung behandelt eine der vielen möglichen Realisierungen des neuen Verfahrens am Beispiel eines autonomen Fahrzeugsteuerungssystems. Die Beschreibung verwendet Begriffe, die im Folgenden genau umschrieben sind.

Ein *kontrolliertes Objekt (controlled object, abgekürzt CO)* ist eine *technische Anlage* die von einem Computersystem und/oder einen Menschen gesteuert wird, mit dem Ziel im Laufe der Zeit die vorgegebene Aufgabenstellung unter den gegebenen Umweltbedingungen zu erfüllen. Beispiele für COs sind: ein Fahrzeug, ein Flugzeug, eine Landmaschine, ein Roboter, oder eine Drohne.

Ein *Umweltmodell* ist eine digitale Datenstruktur, die zu einem gegebenen Zeitpunkt ein Abbild der für die vorgegebene Aufgabe wesentlichen Charakteristika der Umwelt darstellt. Ein Beispiel für ein Umweltmodell ist die Beschreibung einer Straße und der zum gewählten Zeitpunkt auf der Straße befindlichen Objekte.

Eine *Trajektorie* ist ein Pfad den ein CO im Laufe der Zeit ausführen kann um die vorgegebene Aufgabe zu erfüllen. Die Charakteristika der *Trajektorien* eines CO hängen von der Konstruktion des CO, der vorgegebenen Aufgabenstellung und den aktuellen Umweltbedingungen ab. Zum Beispiel bezeichnet man einen möglichen Weg den ein Fahrzeug unter den gegebenen Umweltbedingungen ausführen kann um sein Ziel zu erreichen, als *Trajektorie.*

Unter einem *Softwareprozess* wird die Ausführung eines Programmsystems auf einem oder mehreren Computers verstanden.

Eine *Fault Containment Unit (FCU)* ist eine Baueinheit die die unmittelbaren Folgen einer Fehlerursache abkapselt (6, p155)

Unter dem Begriff *fehlertolerante Hardware* wird eine Hardwarearchitektur verstanden, die auftretende Hardwarefehler entsprechend der vorliegenden Fehlerhypothese maskiert. Beispiele für solche Hardwarearchitekturen sind Triple-Modulare Redundanz (TMR) oder die parallele Ausführung der Software auf self-checking Baueinheiten wie in (6, p.156) beschrieben. Es entspricht dem *State-of-the-art,* dass die redundanten FCUs über mindestens zwei unabhängige Kommunikationskanäle ihre Eingangsdaten empfangen und über mindestens zwei unabhängige Kommunikationskanäle ihre Ausgabedaten weitergeben

Ein *Datenflusspfad (DFP)* ist eine Aufeinanderfolge von Softwareprozessen, wobei der erste Softwareprozess Eingabedaten liest und die Ausgabedaten eines vorgelagerten Softwareprozesses die Eingabedaten für den folgenden Softwareprozess darstellen. Die Ausgabedaten des letzten Softwareprozesses sind die Ergebnisdaten des DFP. In vielen Anwendungsfällen der Echtzeitdatenverarbeitung wird ein DFP zyklisch durchlaufen. Zwischen den Zyklen eines DFP kann der innere Zustand [6, p.84] eines Softwareprozesses gespeichert werden. In vielen Anwendungsfällen der Echtzeitdatenverarbeitung übernimmt der erste Softwareprozess eines DFP die Sensordaten und produziert der letzte Softwareprozess eines DFP die Sollwerte für die Aktuatoren.

Zwei DFPs sind *diversitär* wenn sie die gleiche Zielsetzung verfolgen, aber die Softwareprozesse der DFPs unterschiedliche Algorithmen (Algorithmen-Diversität) und/oder unterschiedliche Eingabedaten (Daten-Diversität) verwenden.

Eine *Umweltmodellbildung* ist ein Softwareprozess, der ausgehend von den statischen Daten der Umwelt und den von diversen Sensoren erfassten dynamischen Daten der Umwelt ein Umweltmodell erstellt.

Eine *Trajektorenplanung* ist ein Softwareprozess, der auf der Basis eines gegebenen Umweltmodells eine oder mehrere mögliche Trajektorien festlegt, die die vorgegebene Aufgabe lösen.

Eine *Entscheidungsinstanz* ist ein anwendungsspezifischer Softwareprozess, der eine Anzahl von Vorschlägen als Eingabedaten erhält, diese Vorschläge analysiert und die Freiheit hat eine Entscheidung zu treffen welcher - möglicherweise abgeänderter - Vorschlag ausgewählt wird. In vielen Fällen ist eine Entscheidungsinstanz ein NDDC. Zum Beispiel erhält eine Entscheidungsinstanz eine Anzahl von Vorschlägen möglicher Trajektorien eines Fahrzeugs als Eingabe und entscheidet sich für eine - möglicherweise abgeänderte - Trajektorie die zur Ausführung gebracht wird.

Beispielsweise können unter "beobachtete Daten" die Daten, die sich aus der Beobachtung ergeben, verstanden werden.

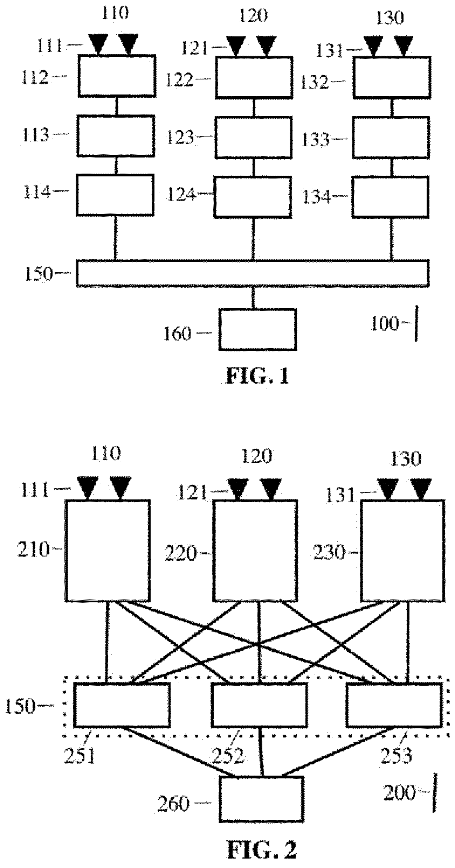

Fig. 1 zeigt ein Datenflussdiagramm eines *komplexen elektronischen Systems* zur autonomen Steuerung eines Fahrzeugs. Die senkrechten Verbindungslinien **100** der Kästchen von Fig. 1 zeigen den Datenfluss von oben nach unten.

In Fig. 1 sind drei diversitären DFPs **110, 120** und **130** dargestellt. Jeder der DFPs verfügt über eigene Sensoren zur Beobachtung der Umwelt des Fahrzeugs. Die Sensoren werden zyklisch ausgelesen. DFP **110** hat die Sensoren **111,** DFP **120** hat die Sensoren **121** und DFP **130** hat die Sensoren **131.** Beispiele für Sensoren eines Fahrzeugs sind Kameras, Radarsensor, LIDAR Sensoren und Ultraschallsensoren. In der ersten Verarbeitungsstufe des DFP werden die rohen Sensordaten ausgelesen und vorverarbeitet. Das ist in DFP **110** der Softwareprozess **112,** in DFP **120** der Softwareprozess **122** und in DFP **130** der Softwareprozess **132.**

Es ist vorteilhaft, wenn die Softwareprozesse **112, 122** und **132** unterschiedliche Algorithmen (*Algorithmen-Diversität*) verwenden die mit unterschiedlichen Eingabedaten versorgt werden (*Daten-Diversität*)*.*

Es ist vorteilhaft, wenn die Sensoren **111, 121** und **131** die Umgebung gleichzeitig beobachten. Die gleichzeitige Beobachtung kann mit einem von einer fehlertoleranten globalen Zeit abgeleiteten verteilten Triggersignal erreicht werden.

In der zweiten Verarbeitungsstufe des DFP wird auf der Basis der empfangene Sensordaten und Informationen über die statischen Parameter der Umwelt (z.B. aus dem vorliegenden Kartenmaterial des Navigationssystems) die Umweltmodellbildung vollzogen. Das ist in DFP **110** der Softwareprozess **113,** in DFP **120** der Softwareprozess **123** und in DFP **130** der Softwareprozess **133.**

Es ist vorteilhaft, wenn die Softwareprozesse **113, 123** und **133** unterschiedliche Algorithmen (*Algorithmen-Diversität*) verwenden die mit unterschiedlichen Eingabedaten versorgt werden (*Daten-Diversität*).

In der dritten Verarbeitungsstufe eines DFP wird auf der Basis der gebildeten Umweltmodelle der zweiten Verarbeitungsstufe die Trajektorenplanung vollzogen. Das ist in DFP **110** der Softwareprozess **114,** in DFP **120** der Softwareprozess **124** und in DFP **130** der Softwareprozess **134.**

Es ist vorteilhaft, wenn die Softwareprozesse **114, 124** und **134** unterschiedliche Algorithmen (*Algorithmen-Diversität*) verwenden die mit unterschiedlichen Eingabedaten versorgt werden (*Daten-Diversität*).

Die Trajektorenplanung in der dritten Verarbeitungsstufe entwickelt mehrere alternative Trajektorien zur Zielerreichung die dem folgenden Softwareprozess, der Entscheidungsinstanz **150** angeboten werden. Die zum Vorschlag gebrachten Trajektorien werden von der Trajektorenplanung aus der Sicht der Sicherheit und der Effektivität in Bezug auf die Zielerreichung bewertet. Die Entscheidungsinstanz **150** erhält somit mehre diverse bewertete Vorschläge für Trajektorien der Trajektorenplanung **114**, **124** und **134** und entscheidet sich für eine Trajektorie, die von mindestens zwei der drei Trajektorenplanungsprozesse **114, 124** und **134** vorgeschlagen und angemessen bewertet wurde. Anschließend werden von der Entscheidungsinstanz **150** die Sollwerte zur Realisierung der ausgewählten Trajektorie ermittelt und an die intelligenten Aktuatoren **160,** d.s. Lenkung, Bremse und Beschleunigung, übergeben.

Es ist vorteilhaft, wenn die Übermittlung der Vorschläge für Trajektorien der Softwareprozesse **114, 124** und **134** an die Entscheidungsinstanz **150** nahezu gleichzeitig erfolgt. Dies kann durch die Ableitung der Triggersignale für Aktionen vom Fortschreiten einer fehlertoleranten globalen Zeit erreicht werden.

Im folgenden Abschnitt wird ein Beispiel für eine andere Strategie beschrieben. Während der DFP **110** und der DFP **120** die gleiche Aufgabenstellung verfolgen-die Führung des Fahrzeuges zu dem geplanten Ziel-hat DFP **130** die Aufgabenstellung das Fahrzeug schnellst-möglich in einen sicheren Zustand zu führen, z.B. Abstellen am Straßenrand. Wenn die Entscheidungsinstanz **150** keine Trajektorie findet, die mit einer der angebotenen Alternativen von DFP **110** und der DFP **120** in Einklang ist, so übernimmt die Entscheidungsinstanz **150** den Vorschlag des DFP **130** und gibt Sollwerte an die Aktuatoren **160** die das Fahrzeug in einen sicheren Zustand führen (z.B. Parken am Straßenrand).

Durch die Kombination dieser beiden Strategien lässt sich eine weitere Strategie bilden: Es werden drei DFPs zur Zielerreichung und ein weiterer DFP zur Erreichung eines sicheren Zustandes realisiert.

Fig. 2 zeigt eine mögliche Hardwarestruktur zur Ausführung der DFPs der Fig. 1. Die Kästchen der Fig. 2 stellen Baueinheiten dar. Die Verbindungslinien **200** der Baueinheiten von Fig. 2 zeigen die vorhanden Kommunikationskanäle zur Übertragung von Daten.

DFP **110** beinhaltet die Sensoren **111** und die Baueinheit **210.** DFP **120** beinhaltet die Sensoren **121** und die Baueinheit **220.** DFP **130** beinhaltet die Sensoren **131** und die Baueinheit **230.** Die Baueinheit **210** bildet eine *Fault-Containment Unit* (FCU) die die Hardwarekomponenten (Knotenrechner, Datenleitungen, Speicher) zur Ausführung der Softwareprozesse **112, 113** und **114** des DFP **110** enthält. Die Baueinheit **220** bildet eine *Fault-Containment Unit* (FCU) die die Hardwarekomponenten (Knotenrechner, Datenleitungen, Speicher) zur Ausführung der Softwareprozesse **122, 123** und **124** des DFP **120** enthält. Die Baueinheit **230** bildet eine *Fault-Containment Unit* (FCU) die die Hardwarekomponenten (Knotenrechner, Datenleitungen, Speicher) zur Ausführung der Softwareprozesse **132, 133** und **134** des DFP **130** enthält.

Die Entscheidungsinstanz **150** der Fig. 1 wird auf den drei Knotenrechnern **251, 252** und **253** gleichzeitig replika deterministisch ausgeführt um Hardwarefehler maskieren zu können. Die Ergebnisse der drei Knotenrechnern **251, 252** und **253** werden der intelligenten Aktuatorsteuerung **260** übergeben, die eine bitweise zwei-aus-der Votierung vornimmt.

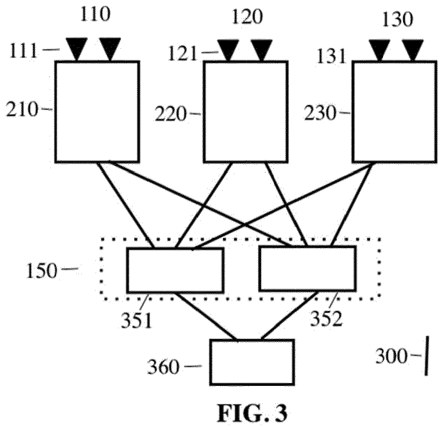

Fig. 3 zeigt eine andere Hardwarestruktur zur Ausführung der DFPs der Fig. 1. Die Kästchen der Fig. 2 stellen Baueinheiten dar. Die Verbindungslinien **200** der Baueinheiten von Fig. 2 zeigen die vorhanden Kommunikationskanäle zur Übertragung von Daten. Im Unterschied zu Fig.2 wird in Fig. 3 die Entscheidungsinstanz **150** auf den beiden self-checking Baueinheiten **351** und **352** ausgeführt. Die intelligente Aktuatorsteuerung **360** übernimmt eines der Resultate von **351** oder **352.** Da die Softwareprozesse die auf den Baueinheiten **351** und **352** ablaufen replika-deterministisch sind und die Hardware der Baueinheiten **351** und **352** sich selbst überprüft, müssen die Resultate der Baueinheiten **351** und **352** identisch sein.

Die Diversität der komplexen Software kann entweder durch *Daten-Diversität* oder durch *Algorithmen-Diversität* oder durch beide *Daten-Diversität* und *Algorithmen-Diversität* erreicht werden. Es ist großem Vorteil, wenn sowohl *Daten-Diversität* wie auch *Algorithmen-Diversität* realisiert wird.

Wenn aus ökonomischen Gründen nur eine Diversität angewendet wird, so bieten sich einige Möglichkeiten der Kostenreduktion.

Wenn auf die *Daten-Diversität* der DFPs verzichtet wird kann ein Sensor die erfassten Daten an mehrere DFPs übergeben.

Die Daten-Diversität kann verbessert werden, wenn die verschiedenen DFPs unterschiedliche Koordinatensysteme zur Darstellung der Trajektorien verwenden.

Wenn auf die *Algorithmen Diversität* der DFPs verzichtet wird können in allen DFPs dieselben Algorithmen zum Einsatz kommen.

Im laufenden Betrieb ist es sehr schwierig zu entscheiden ob eine festgestellte Abweichung eines Resultats eines DFP von den beiden anderen DFPs auf Grund eines Alterungsfehlers in der Hardware oder eines Softwarefehlers verursacht wurde. Diese Unterscheidung ist jedoch im Augenblick des Auftretens des Fehlers unwesentlich, da die vorgeschlagene Architektur beide Fehlerarten maskiert.

## Patentansprüche

1. Verfahren zur Steuerung eines technischen Prozesses, der in einer sich verändernden Umgebung eingebettet ist, wobei das die Steuerung durchführende elektronische System Sensoren, insbesondere eine Vielzahl von Sensoren, Aktuatoren und Knotenrechner, insbesondere eine Vielzahl von Knotenrechnern, die über ein Echtzeitkommunikationssystem Daten austauschen, umfasst,
**dadurch gekennzeichnet, dass**
*zwischen komplexer* und *einfacher Software* unterschieden wird,
wobei bei einer komplexen Software die Wahrscheinlichkeit für ein Auftreten von Entwurfsfehlern ASIL B, nach ISO 26262, entspricht, und wobei bei einer einfachen Software eine Fehlerrate wie von ASIL D, nach ISO 26262, ASIL D
gefordert erreicht wird, und
wobei die *komplexe Software* auf mindestens zwei unabhängigen Datenflusspfaden, DFP, **(110, 120)** gleichzeitig ausgeführt wird, wobei jeder Datenflusspfad mit Sensoren den technischen Prozess und dessen Umgebung zyklisch beobachtet und aus Eingabedaten in Form von beobachteten Daten, das sind Sensordaten, die sich aus der zyklischen Beobachtung des technischen Prozess und seiner Umgebung ergeben, mittels Algorithmen ein Modell des technischen Prozesses und dessen Umgebung aufbaut und eine Trajektorienplanung durchführt, um eine oder mehrere mögliche Trajektorien, die unter den gegebenen Umweltbedingungen der vorgegeben Zielsetzung entsprechen, zu erstellen, wobei die Datenflusspfade zyklisch durchlaufen werden, und die Sensoren zyklisch ausgelesen werden, und wobei
- die zyklisch ausgelesenen Sensordaten diversitär, d.h. unterschiedlich und die in den DFP eingesetzten Algorithmen diversitär sind, oder
- die zyklisch ausgelesenen Sensordaten nicht diversitär, d.h. nicht unterschiedlich und die in den DFP eingesetzten Algorithmen diversitär sind,
oder
- die zyklisch ausgelesenen Sensordaten diversitär und die in den DFP eingesetzten Algorithmen nicht diversitär sind,
und wobei diese von den DFPs entwickelten Trajektorien einer Entscheidungsinstanz **(150)** zur Entscheidung übergeben werden, wobei die Entscheidungsinstanz **(150)** mittels einer *einfachen Software* realisiert wird, und wobei die Entscheidungsinstanz **(150)** eine Trajektorie auswählt, und wo die Entscheidungsinstanz **(150)** die ausgewählte Trajektorie an eine Aktuatorsteuerung übergibt, und wo die Entscheidungsinstanz **(150)** auf einer fehlertoleranten Hardware ausgeführt wird.

2. Verfahren nach Anspruch 1, **dadurch gekennzeichnet, dass** die an die Entscheidungsinstanz **(150)** übergebenen Trajektorien in Bezug auf Sicherheit und Effektivität bewertet sind.

3. Verfahren nach einem der Ansprüche 1 oder 2, **dadurch gekennzeichnet, dass** mindestens zwei unabhängige Datenflusspfade, DFP, **(110, 120)** Softwareprozesse abarbeiten, die der vorgegebenen Zielsetzung entsprechen, und ein weiterer DFP **(130)** die Aufgabe hat, den technischen Prozess in einen sicheren Zustand zu führen, und wo im Falle, dass die Entscheidungsinstanz **(150)** keine Trajektorie findet, die der vorgegebenen Zielsetzung entspricht, jene Trajektorie ausgewählt wird, die den technischen Prozess in einen sicheren Zustand führt.

4. Verfahren nach einem der Ansprüche 1 bis 3, **dadurch gekennzeichnet, dass** Baueinheiten, das sind z.B. die Knotenrechner, das Kommunikationssystem, Sensoren, Aktuatoren, vorzugsweise alle Baueinheiten, Zugriff auf eine fehlertolerante globale Zeit haben und die Kontrolle des Datenflusses zwischen den Knotenrechnern vom Fortschreiten der globalen Zeit abgeleitet wird.

5. Verfahren nach einem der Ansprüche 1 bis 4, **dadurch gekennzeichnet, dass** im Falle, dass keine Daten-Diversität vorliegt, d.h. die Sensordaten für verschiedene DFPs nicht unterschiedliche sind, die von den Sensoren erfassten Daten an mehrere DFPs übergeben werden.

6. Verfahren nach einem der Ansprüche 1 bis 5, **dadurch gekennzeichnet, dass** auf Algorithmen-Diversität der DFPs verzichtet wird und in allen DFPs dieselben Algorithmen zum Einsatz kommen.

7. Verfahren nach einem der Ansprüche 1 bis 6, **dadurch gekennzeichnet, dass** die Daten-Diversität durch Verwendung unterschiedlicher Koordinatensysteme zur Darstellung der Trajektorien verbessert wird.

8. Elektronisches System zur Steuerung eines technischen Prozesses, der in einer sich verändernden Umgebung eingebettet ist, wobei das elektronische System Sensoren, insbesondere eine Vielzahl von Sensoren, Aktuatoren und Knotenrechner, insbesondere eine Vielzahl von Knotenrechnern, die über ein Echtzeitkommunikationssystem Daten austauschen, umfasst,
**dadurch gekennzeichnet dass**
*zwischen komplexer* und *einfacher Software* unterschieden wird,
wobei bei einer komplexen Software die Wahrscheinlichkeit für ein Auftreten von Entwurfsfehlern ASIL B, nach ISO 26262, entspricht, und wobei bei einer einfachen Software eine Fehlerrate wie von ASIL D, nach ISO 26262; gefordert
erreicht wird, und wobei die *komplexe Software* auf mindestens zwei unabhängigen Datenflusspfaden, DFP, **(110, 120)** gleichzeitig ausgeführt wird, wobei jeder Datenflusspfad mit Sensoren den technischen Prozess und dessen Umgebung zyklisch beobachtet und aus Eingabedaten in Form von beobachteten Daten, das sind Sensordaten, die sich aus der zyklischen Beobachtung des technischen Prozess und seiner Umgebung ergeben, mittels Algorithmen ein Modell des technischen Prozesses und dessen Umgebung aufbaut und eine Trajektorienplanung durchführt, um eine oder mehrere mögliche Trajektorien, die unter den gegebenen Umweltbedingungen der vorgegeben Zielsetzung entsprechen, zu erstellen, wobei die Datenflusspfade zyklisch durchlaufen werden, und die Sensoren zyklisch ausgelesen werden, und wobei
- die zyklisch ausgelesenen Sensordaten Daten diversitär, d.h. unterschiedlich und die in den DFP eingesetzten Algorithmen diversitär sind, oder
- die zyklisch ausgelesenen Sensordaten nicht diversitär, d.h. nicht unterschiedlich und die in den DFP eingesetzten Algorithmen diversitär sind, oder
- die zyklisch ausgelesenen Sensordaten diversitär und die in den DFP eingesetzten Algorithmen nicht diversitär sind,
und wobei diese von den DFPs entwickelten Trajektorien einer Entscheidungsinstanz **(150)** zur Entscheidung übergeben werden, wobei die Entscheidungsinstanz **(150)** mittels einer *einfachen Software* realisiert wird, und wobei die Entscheidungsinstanz **(150)** eine Trajektorie auswählt, und wo die Entscheidungsinstanz **(150)** die ausgewählte Trajektorie an eine Aktuatorsteuerung übergibt, und wo die Entscheidungsinstanz **(150)** auf einer fehlertoleranten Hardware ausgeführt wird.

## Claims

1. Method for controlling a technical process embedded in a changing environment, wherein the electronic system performing the controlling comprises sensors, in particular a plurality of sensors, actuators, and node computers, in particular a plurality of node computers exchanging data via a real-time communication system,
**characterised in that**
a distinction is made between *complex* and *simple* software,
wherein for a complex software, the probability of design errors occurring corresponds to ASIL B, according to ISO 26262, and wherein for a simple software, an error rate as required by ASIL D, according to ISO 26262, is attained, and
wherein the *complex software* is executed simultaneously on at least two independent data flow paths (110, 120), DFP, wherein each data flow path cyclically monitors the technical process and its environment with sensors, and builds a model of the technical process and its environment from input data in the form of observed data, that is sensor data resulting from cyclic monitoring the technical process and its environment, using algorithms, and carries out trajectory planning in order to create one or more possible trajectories which correspond to the predetermined objective under the given environmental conditions, wherein the data flow paths are run through cyclically and the sensors are read out cyclically, and wherein
- the cyclically read sensor data are diverse, i.e. different, and the algorithms used in the DFP are diverse, or
- the cyclically read sensor data are not diverse, i.e. not different, and the algorithms used in the DFP are diverse, or
- the cyclically read sensor data are diverse and the algorithms used in the DFP are not diverse,
and wherein said trajectories generated by the DFPs are delivered to a decision instance (150) for decision, wherein the decision instance (150) is realised using a *simple software,* and wherein the decision instance (150) selects a trajectory, and where the decision instance (150) delivers the selected trajectory to an actuator controller, and where the decision instance (150) is executed on fault-tolerant hardware.

2. The method according to claim 1, **characterized in that** the trajectories delivered to the decision instance (150) are evaluated in terms of safety and effectiveness.

3. The method according to any one of claims 1 or 2, **characterized in that** at least two independent data flow paths (110, 120), DFP, execute software processes which correspond to the predetermined objective, and a further DFP (130) has the task of taking the technical process into a safe state, and where, in the event that the decision instance (150) does not find a trajectory which corresponds to the predetermined objective, a trajectory is selected which takes the technical process into a safe state.

4. The method according to any one of claims 1 to 3, **characterized in that** structural units, such as the node computers, the communication system, sensors, actuators, preferably all structural units, have access to a fault-tolerant global time and the control of the data flow between the node computers is derived from the progression of the global time.

5. The method according to any one of claims 1 to 4, **characterized in that** in case that there is no data diversity, i.e. the sensor data for different DFPs are not different, the data acquired by the sensors is transferred to several DFPs.

6. The method according to any one of claims 1 to 5, **characterized in that** algorithm diversity of the DFPs is dispensed with and the same algorithms are used in all DFPs.

7. The method according to any one of claims 1 to 6, **characterized in that** the data diversity is improved by using different coordinate systems to represent the trajectories.

8. Electronic system for controlling a technical process embedded in a changing environment, wherein the electronic system comprises sensors, in particular a plurality of sensors, actuators, and node computers, in particular a plurality of node computers exchanging data via a real-time communication system
**characterized in that**
a distinction is made between *complex* and *simple* software,
wherein for a complex software, the probability of design errors occurring corresponds to ASIL B, according to ISO 26262, and wherein for a simple software, an error rate as required by ASIL D, according to ISO 26262, is attained, and
wherein the *complex software* is executed simultaneously on at least two independent data flow paths (110, 120), DFP, wherein each data flow path cyclically monitors the technical process and its environment with sensors, and builds a model of the technical process and its environment from input data in the form of observed data, that is sensor data resulting from cyclic monitoring the technical process and its environment, using algorithms, and carries out trajectory planning in order to create one or more possible trajectories which correspond to the predetermined objective under the given environmental conditions, wherein the data flow paths are run through cyclically and the sensors are read out cyclically, and wherein
- the cyclically read sensor data are diverse, i.e. different, and the algorithms used in the DFP are diverse, or
- the cyclically read sensor data are not diverse, i.e. not different, and the algorithms used in the DFP are diverse, or
- the cyclically read sensor data are diverse and the algorithms used in the DFP are not diverse,
and wherein said trajectories generated by the DFPs are delivered to a decision instance (150) for decision, wherein the decision instance (150) is realised using a *simple software,* and wherein the decision instance (150) selects a trajectory, and where the decision instance (150) delivers the selected trajectory to an actuator controller, and where the decision instance (150) is executed on fault-tolerant hardware.

## Revendications

1. Procédé de commande d'un processus technique qui est intégré dans un environnement changeant, dans lequel le système électronique qui effectue la commande comprend des capteurs, en particulier une pluralité de capteurs, des actionneurs et des ordinateurs de nœud, en particulier une pluralité d'ordinateurs de nœud qui échangent des données par l'intermédiaire d'un système de communication en temps réel,
**caractérisé en ce que**
une distinction est faite entre logiciel *complexe* et logiciel *simple,*
où, dans le cas d'un logiciel complexe, la probabilité d'apparition d'erreurs de conception est ASIL B, selon la norme ISO 26262, et dans le cas d'un logiciel simple, un taux d'erreur tel que requis par l'ASIL D, selon la norme ISO 26262, est atteint, et
dans lequel le *logiciel complexe* est exécuté simultanément sur au moins deux chemins de flux de données indépendants (110, 120), DFP, chaque chemin de flux de données observant cycliquement le processus technique et son environnement avec des capteurs et, à partir de données d'entrée sous forme de données observées, c'est-à-dire de données de capteurs résultant de l'observation cyclique du processus technique et de son environnement, élabore un modèle du processus technique et de son environnement au moyen d'algorithmes et effectue une planification de trajectoire afin de créer une ou plusieurs trajectoires possibles qui, dans les conditions environnementales données, correspondent à l'objectif prédéterminé, les trajectoires de flux de données étant parcourues de manière cyclique et les capteurs étant lus de manière cyclique, et
- les données du capteur à lecture cyclique sont diverses, c'est-à-dire différentes, et les algorithmes utilisés dans le DFP sont divers, ou
- les données du capteur à lecture cyclique ne sont pas diverses, c'est-à-dire pas différentes, et les algorithmes utilisés dans le DFP sont divers, ou
- les données des capteurs à lecture cyclique sont diverses et les algorithmes utilisés dans le DFP ne sont pas divers,
et dans lequel lesdites trajectoires développées par les DFP sont transférées à une instance de décision (150) pour décision, l'instance de décision (150) étant mise en oeuvre au moyen d'un *logiciel simple,* et l'instance de décision (150) sélectionnant une trajectoire, et où l'instance de décision (150) transfère la trajectoire sélectionnée à un contrôleur d'actionneur, et où l'instance de décision (150) est exécutée sur un matériel tolérant de défaillances.

2. Procédé selon la revendication 1, **caractérisée en ce que** les trajectoires transférées à l'instance de décision (150) sont évaluées en termes de sécurité et d'efficacité.

3. Procédé selon l'une quelconque des revendications 1 ou 2, **caractérisé en ce qu'**au moins deux chemins de flux de données indépendants (110, 120), DFP, exécutent des processus logiciels qui correspondent à l'objectif prédéterminé, et un autre DFP (130) visant conduire le processus technique dans un état sûr, et où, dans le cas où l'instance de décision (150) ne trouve pas de trajectoire qui correspond à l'objectif prédéterminé, cette trajectoire qui conduit le processus technique dans un état sûr est sélectionnée.

4. Procédé selon l'une quelconque des revendications 1 à 3, **caractérisé en ce que** les unités structurelles, telle que les ordinateurs de nœud, le système de communication, les capteurs, les actionneurs, de préférence toutes les unités structurelles, ont accès à un temps global tolérant de défaillances et le contrôle du flux de données entre les ordinateurs de nœud est dérivé de la progression du temps global.

5. Procédé selon l'une quelconque des revendications 1 à 4, **caractérisée en ce que** dans le cas où il n'y a pas de diversité de données, c'est-à-dire que les données des capteurs pour différents DFP ne sont pas différentes, les données acquises par les capteurs sont transférées à plusieurs DFP.

6. Procédé selon l'une quelconque des revendications 1 à 5, **caractérisée en ce que** la diversité des algorithmes des DFP est supprimée et que les mêmes algorithmes sont utilisés dans tous les DFP.

7. Procédé selon l'une quelconque des revendications 1 à 6, **caractérisée en ce que** la diversité des données est améliorée en utilisant différents systèmes de coordonnées pour représenter les trajectoires.

8. Système électronique pour la commande d'un processus technique qui est intégré dans un environnement changeant, le système électronique comprenant des capteurs, en particulier une pluralité de capteurs, des actionneurs et des ordinateurs de nœud, en particulier une pluralité d'ordinateurs de nœud qui échangent des données par l'intermédiaire d'un système de communication en temps réel,
**caractérisé en ce que**
une distinction est faite entre les logiciels complexes et les logiciels simples, où, dans le cas d'un logiciel complexe, la probabilité d'apparition d'erreurs de conception est ASIL B, selon la norme ISO 26262, et dans le cas d'un logiciel simple, un taux d'erreur tel que requis par l'ASIL D, selon la norme ISO 26262, est atteint, et
dans lequel le *logiciel complexe* est exécuté simultanément sur au moins deux chemins de flux de données indépendants (110, 120), DFP, chaque chemin de flux de données observant cycliquement le processus technique et son environnement avec des capteurs et, à partir de données d'entrée sous forme de données observées, c'est-à-dire de données de capteurs résultant de l'observation cyclique du processus technique et de son environnement, élabore un modèle du processus technique et de son environnement au moyen d'algorithmes et effectue une planification de trajectoire afin de créer une ou plusieurs trajectoires possibles qui, dans les conditions environnementales données, correspondent à l'objectif prédéterminé, les trajectoires de flux de données étant parcourues de manière cyclique et les capteurs étant lus de manière cyclique, et
- les données du capteur à lecture cyclique sont diverses, c'est-à-dire différentes, et les algorithmes utilisés dans le DFP sont divers, ou
- les données du capteur à lecture cyclique ne sont pas diverses, c'est-à-dire pas différentes, et les algorithmes utilisés dans le DFP sont divers, ou
- les données des capteurs à lecture cyclique sont diverses et les algorithmes utilisés dans le DFP ne sont pas divers,
et dans lequel lesdites trajectoires développées par les DFP sont transférées à une instance de décision (150) pour décision, l'instance de décision (150) étant mise en oeuvre au moyen d'un *logiciel simple,* et l'instance de décision (150) sélectionnant une trajectoire, et où l'instance de décision (150) transfère la trajectoire sélectionnée à un contrôleur d'actionneur, et où l'instance de décision (150) est exécutée sur un matériel tolérant de défaillances.
